(19) Europäisches Patentamt
European Patent Office
Office européen des brevets

(11) **EP 3 150 970 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(51) Int Cl.:
*G01D 5/38* (2006.01)    *G02B 5/18* (2006.01)
*G03F 9/00* (2006.01)    *G01B 11/00* (2006.01)
*G01B 11/14* (2006.01)    *G02B 1/115* (2015.01)
*G02B 5/20* (2006.01)

(21) Anmeldenummer: **16178981.3**

(22) Anmeldetag: **12.07.2016**

(54) **OPTISCHES SCHICHTSYSTEM**

OPTICAL LAYER SYSTEM

SYSTEME DE COUCHE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2015 DE 102015218702**

(43) Veröffentlichungstag der Anmeldung:
**05.04.2017 Patentblatt 2017/14**

(73) Patentinhaber: **Dr. Johannes Heidenhain GmbH 83301 Traunreut (DE)**

(72) Erfinder:
• **SPECKBACHER, Peter**
  **84558 Kirchweidach (DE)**
• **FUNK, Stefan**
  **83278 Traunstein (DE)**
• **BÄUML, Christian**
  **83374 Traunwalchen (DE)**

(56) Entgegenhaltungen:
**EP-A1- 2 816 316**    **EP-B1- 2 450 673**
**DE-A1- 19 917 950**    **DE-A1-102005 020 944**

**Beschreibung**

## GEBIET DER TECHNIK

Die vorliegende Erfindung betrifft ein optisches Schichtsystem für eine Positionsmesseinrichtung. Solche Schichtsysteme erfüllen verschiedene Aufgaben beim Formen, Leiten und Auswerten von Lichtstrahlen zur Abtastung von optischen Maßverkörperungen in einer Positionsmesseinrichtung.

## STAND DER TECHNIK

Aus der EP 2450673 B1 ist eine optische Positionsmesseinrichtung bekannt, die auf der Abtastung einer Maßverkörperung mittels Licht beruht. Hierzu wird das Licht einer Lichtquelle in einem Abtastkopf durch eine transparente Abtastplatte auf einen Maßstab geleitet, von dort zurück zum Abtastkopf reflektiert und in einer Sensoreinheit detektiert. Durch Auswertung der Sensorsignale werden hochgenaue Positionswerte ermittelt, die die zu messende Verschiebung zwischen dem Abtastkopf und der Maßverkörperung angeben. Für bestimmte Funktionen ist es dabei sogar notwendig, dass das Licht mehrmals auf die Maßverkörperung gelangt. Die Abtastplatte weist daher sowohl auf ihrer Ober- als auch auf ihrer Unterseite unterschiedliche Funktionsflächen auf, die als Reflektor bzw. Spiegel oder Gitterstrukturen (z.B. in Form von Beugungsgittern oder diffraktiven Linsen) wirken, sowie solche Flächen, die mit einer Antireflexschicht versehen sind, um störendes Streulicht innerhalb und außerhalb der Abtastplatte zu absorbieren.

Spiegel können beispielsweise mit aufgedampften Metallen auf dem transparenten Substrat einer Abtastplatte erzeugt werden. Es sind auch dielektrische Spiegel möglich, die durch eine Kombination aus Schichten mit sorgfältig gewählten, auf die Wellenlänge des verwendeten Lichts angepassten Brechungsindizes und Schichtdicken reflektierend wirken.

Optische Gitter können als Phasengitter ausgebildet werden, die aus zwei abwechselnd angeordneten Reflexionsschichten bestehen, von denen die eine Reflexionsschicht eine optisch verzögernde Abstandsschicht aufweist, welche in Richtung der nullten Beugungsordnung eine Phasenänderung von 180 Grad hervorruft. Amplitudengitter beruhen hingegen auf abwechselnd hellen und dunklen Bereichen, wie beispielsweise bei einer strukturierten metallischen Schicht. Beispiele für optische Gitter und deren Anwendung in Positionsmesseinrichtungen offenbaren die EP 0742455 A1 (Phasengitter) oder die DE 10236788 A1 (Amplitudengitter).

Antireflexschichten bestehen wiederum aus Schichten unterschiedlicher optischer Dichte, die Streulicht absorbieren.

Die Herstellung solcher Schichten oder Schichtstapel mit unterschiedlichsten Aufgaben ist technologisch und prozessbedingt aufwändig. Es werden an jede Schicht höchste Qualitätsanforderungen gestellt, um letztlich eine möglichst genaue Positionsmessung zu ermöglichen.

## ZUSAMMENFASSUNG DER ERFINDUNG

Es ist Aufgabe der Erfindung, ein optisches Schichtsystem für eine Positionsmesseinrichtung anzugeben, mit dem die unterschiedlichsten Anforderungen erfüllt werden können, das aber dennoch mit möglichst geringem Aufwand hergestellt werden kann.

Diese Aufgabe wird gelöst durch ein optisches Schichtsystem gemäß Anspruch 1. Vorteilhafte Details dieses Schichtsystems ergeben sich auch aus den von Anspruch 1 abhängigen Ansprüchen.

Es wird ein optisches Schichtsystem für eine Positionsmesseinrichtung offenbart, mit dem auf einer Oberfläche eines transparenten Substrats wenigstens eine erste, zweite und dritte Funktionsfläche mit jeweils unterschiedlicher optischer Funktion bereit gestellt werden kann. Diese Funktionsflächen sind aus einem ersten Schichtstapel und einem zweiten Schichtstapel aufgebaut.

Die erste Funktionsfläche besteht ganzflächig aus dem ersten Schichtstapel und wirkt als Antireflexschicht, während die dritte Funktionsfläche ganzflächig aus dem zweiten Schichtstapel besteht und als Spiegel wirkt.

Die zweite Funktionsfläche wirkt als optisches Gitter, indem die beiden Schichtstapel in Abständen von weniger als 1 mm, bevorzugt weniger als 50 $\mu$m, besonders bevorzugt weniger als 20 $\mu$m periodisch abwechselnd angeordnet sind. Das optische Gitter bewirkt in Verbindung mit dem in der Positionsmesseinrichtung verwendeten Licht Beugungseffekte. Diese Beugungseffekte führen zur Aufspaltung des auf das Gitter einfallenden Lichts in unterschiedliche Beugungsordnungen, die jeweils unterschiedliche Richtungen und Intensitäten aufweisen. Mit solchen Gittern, deren Periodizität und Gittervektor lokal variieren können, lassen sich verschiedenste optische Funktionen realisieren, wie beispielsweise diffraktive Linsen.

Weitere Vorteile und Einzelheiten der vorliegenden Erfindung ergeben sich aus der nachfolgenden Beschreibung verschiedener Ausführungsformen anhand der Figur.

## KURZE BESCHREIBUNG DER ZEICHNUNG

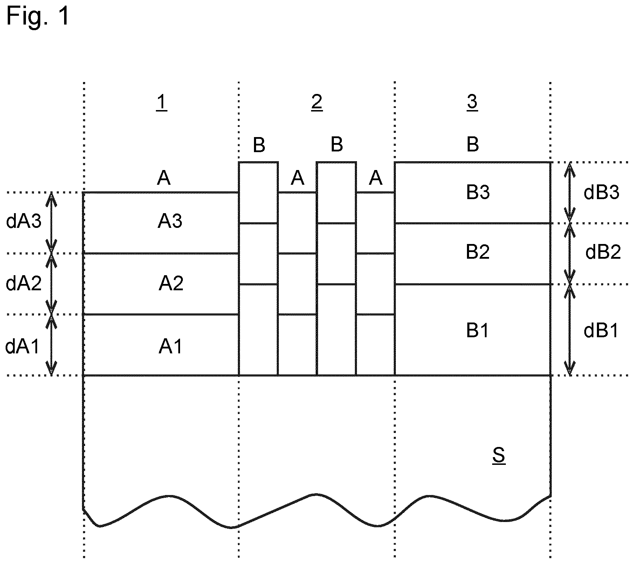

Dabei zeigt die
Figur 1 ein optisches Schichtsystem für eine Positionsmesseinrichtung.

## BESCHREIBUNG DER AUSFÜHRUNGSFORMEN

Die Figur 1 zeigt ein optisches Schichtsystem für eine Positionsmesseinrichtung.

Auf einem transparenten Substrat S finden sich drei unterschiedliche Funktionsflächen 1, 2, 3, die jeweils unterschiedliche Aufgaben im Abtaststrahlengang einer Positionsmesseinrichtung übernehmen.

So handelt es sich bei der ersten Funktionsfläche 1 um eine Antireflexschicht zur Unterdrückung und Absorption von unerwünschtem Streulicht innerhalb und außerhalb der Abtastplatte.

Die zweite Funktionsfläche 2 stellt ein optisches Gitter dar, dessen periodische Struktur mit dem einfallenden Licht wechselwirkt. Dabei kann es sich um ein Phasengitter oder um ein Amplitudengitter handeln. Zur Erzielung der gewünschten optischen Wirkung sind auch eine variable Gitterperiode und eine variable Richtung der Gitterperiode vorstellbar. Das bedeutet, dass die Striche des Gitters gekrümmt sein können, etwa um eine Strahlfokussierung zu erreichen. Solche Gitter können beispielsweise der Detektion einer Referenzmarke auf dem Maßstab der Positionsmesseinrichtung dienen, um so eine absolute Position ermitteln zu können, von der aus man Verschiebungen zwischen Maßstab und Abtastkopf anhand von periodischen Signalen erfassen kann.

Die dritte Funktionsfläche 3 wirkt als Spiegel und reflektiert vom Substrat S her einfallendes Licht. Dieser Effekt kann durch einen metallischen Spiegel oder einen dielektrischen Spiegel erzielt werden, wie in separaten Ausführungsbeispielen noch näher ausgeführt wird.

Erfindungsgemäß sind die drei Funktionsflächen 1, 2, 3 mittels eines optischen Schichtsystems aufgebaut, das nur genau zwei unterschiedliche Schichtstapel, nämlich einen ersten Schichtstapel A und einen zweiten Schichtstapel B umfasst.

Dabei wird die erste Funktionsfläche 1 (also die Antireflexschicht) ganzflächig vom ersten Schichtstapel A, die dritte Funktionsfläche 3 (also der Spiegel) ganzflächig vom zweiten Schichtstapel B gebildet.

Die zweite Funktionsfläche 2 (also das optische Gitter) wird aus einer periodischen, abwechselnden Anordnung der beiden Schichtstapel A, B gebildet. Die Anordnung der beiden Schichtstapel A, B kann dabei periodisch in einer Richtung sein (z.B. Liniengitter), oder auch periodisch in zwei Richtungen (z.B. Schachbrett-Muster oder Kreuzgitter). Auch diffraktive Linsen mit beliebigen beugenden Strukturen können aus einer geeigneten Abfolge der beiden Schichtstapel A, B hergestellt werden.

Obwohl also drei höchst unterschiedliche Funktionsflächen 1, 2, 3 zur Verfügung stehen, reduziert sich der Aufwand zur Herstellung eines solchen Substrats S mit optischem Schichtsystem darauf, auf diesem Substrat S mit an sich bekannten Methoden (wie Abscheiden von Schichten, Fotolithografie, Ätzen, Lift-Off-Prozesse, etc.) lediglich zwei unterschiedliche Schichtstapel A, B in geeigneter räumlicher Verteilung aufzubringen.

Beispielhaft sei als Anwendung die Verwendung des optischen Schichtsystems in einer Abtastplatte einer Positionsmesseinrichtung mit einem Maßstab und einem Abtastkopf betrachtet, wie sie in der oben erwähnten EP 2450673 B1 gezeigt ist. Hier wird insbesondere die obere, dem Maßstab abgewandte Seite der Abtastplatte betrachtet, bei der das Licht vom Substrat S kommend auf dessen Grenzfläche zur Umgebung fällt, bzw. auf die auf dieser Grenzfläche angeordneten Schichtstapel A, B.

Die einzelnen Schichten der Schichtstapel A, B seinen mit A1, A2, A3 und B1, B2, B3 bezeichnet, jeweils beginnend mit der ersten Schicht A1 bzw. B1, die unmittelbar auf dem Substrat S angeordnet ist. Die Dicke dieser Schichten sei dann mit dA1, dA2, dA3, dB1, dB2, dB3 bezeichnet. Der Brechungsindex der jeweiligen Schicht wird mit nA1, nA2, nA3, nB1, nB2, nB3 bezeichnet, der Brechungsindex des Substrats S mit nS, und der Brechungsindex der Umgebung mit nU.

Für eine leicht nachvollziehbare Darstellung wird in derfolgenden Betrachtung von einem senkrechten Einfall des Lichtstrahls und von Schichten mit einem rein reellen Brechungsindex n ausgegangen. Mehrfachreflexionen werden vernachlässigt.

Bezüglich einer optimierten Antireflexschicht gelten folgende Überlegungen:
Um einen Phasenhub von $\pi$ des Lichts zwischen den Reflexionen der Grenzflächen S nach A1 und A1 nach A2 zu erreichen, sollte gelten:

$$dA1 = L / (4 * nA1) \qquad (1.1)$$

$$nS < nA1 < nA2 \qquad (1.2)$$

Für eine minimale Reflexion sollte im Idealfall außerdem erfüllt sein:

$$nA1 = SQR(nS * nA2) \qquad (1.3)$$

Die Schicht A3 ist optional und sorgt für eine Antireflexschicht gegen die Umgebung (nU = 1) der Abtastplatte. Im Idealfall sollte hier gelten:

$$dA1 = L / (4 * nA1) \qquad (1.4)$$

$$nU < nA3 < nA2 \qquad (1.5)$$

$$nA3 = SQR(nU * nA2) \qquad (1.6)$$

Für die als Spiegel wirksame dritte Funktionsfläche 3 bzw. für den zweiten Schichtstapel B wird zwischen einem metallischen Spiegel und einem dielektrischen Spiegel unterschieden.

Bei einem metallischen Spiegel besteht die Schicht B1 aus einem Metall. Die Schicht B2 dient nur dem Schutz der Schicht B1 vor Beschädigung und zur Abdeckung der Schicht B1. Die Schicht B3 fällt weg und entspricht der Umgebung.

Für einen dielektrischen Spiegel soll für die Reflexionen an den Grenzflächen S nach B1, B1 nach B2 und B2 nach B3 jeweils eine volle Wellenläge Gangunterschied erzielt werden. Daraus ergibt sich:

$$dB1 = L / (4 * nB1) \qquad (2.1)$$

$$dB2 = L / (4 * nB2) \qquad (2.2)$$

$$nS < nB1 > nB2 \qquad (2.3)$$

Zuletzt sei eine als Phasengitter ausgebildete zweite Funktionsfläche 2 betrachtet. Phasengitter sind wegen deren höherer Beugungseffizienz (also der Anteil der einfallenden Strahlung, der in die erste Beugungsordnung gebeugt wird) gegenüber Amplitudengittern bevorzugt.

Um die meist unerwünschte nullte Beugungsordnung zu unterdrücken, sollte ein Phasenunterschied von 180 Grad zwischen den Lichtreflexen des Übergangs S nach B1 und des Übergangs A1 nach A2 bestehen. Somit sollte gelten:

$$dA1 = L / (4 * nA1) \qquad (3.1)$$

Eine größtmögliche Beugungseffizienz wird erreicht wenn gilt:

$$nS = nA1 \qquad (3.2)$$

und außerdem

$$(nS - nB1) / (nS + nB1) = (nA1 - nA2) / (nA1 + nA2) \qquad (3.3)$$

Nun soll die Kombination aus einer Antireflexschicht, einem Phasengitter und einem Spiegel betrachtet werden, die nur aus den beiden Schichtstapeln A und B aufgebaut sind, die aber die Randbedingungen für die besprochenen Funktionsflächen 1, 2, 3 möglichst gut erfüllen sollen.

Die Bedingungen der Gleichungen (1.1) und (3.1) sind identisch und damit in jedem Fall gleichzeitig erfüllbar. Die Bedingungen der Gleichungen (1.2) und (3.2) können nicht gleichzeitig erfüllt werden. Da bei Erfüllung von Gleichung (3.2) keine Antireflexschicht mehr bestünde, aber bei Erfüllung von Gleichung (1.2) noch ein Phasengitter möglich ist, wird der Bedingung von Gleichung (1.2) der Vorzug gegeben.

Ein metallischer Spiegel ist unabhängig von den genannten Bedingungen immer möglich, für einen dielektrischen Spiegel müssen die Gleichungen (2.1), (2.2), (2.3) erfüllt sein.

Auf der Grundlage dieser Überlegungen wurden mit zahlreichen Versuchen und Simulationsrechnungen unterschiedliche konkrete Ausführungsbeispiele für das zugrunde liegende, allgemeine Konzept der Erfindung aufgefunden. Diese werden im Folgenden dargestellt. Die jeweiligen Schichtdicken sind abhängig von der Wellenlänge des in der Positionsmesseinrichtung verwendeten Lichtes, und können anhand der oben genannten Gleichungen näherungsweise bestimmt werden. Der angegebene typische Brechungsindex bezieht sich auf eine Wellenlänge von ca. 1000 nm. Die Simulation ging dabei von einem senkrechten Einfall linear polarisierten Lichts auf ein Lineargitter mit optimierter Strichbreite (Verhältnis Strichbreite/Lücke für maximale Intensität der ersten Beugungsordnung) aus.

Erstes, besonders bevorzugtes Ausführungsbeispiel, basierend auf einem metallischen Spiegel mit einer Goldschicht B1:

| Schicht | Material | Brechungsindex |
|---------|----------|----------------|
| S | Zerodur | 1,53 |
| A1 | $Cr_2O_3$ | 2,25 + i0,01 |
| A2 | Cr | 3,10 + i1,20 |
| A3 | $Cr_2O_3$ | 2,25 + i0,01 |
| B1 | Au | 0,28 + i6,81 |
| B2 | Cr | 3,10 + i1,20 |
| B3 | - | 1,00 |

Die maximale Beugungseffizienz erster Ordnung des Phasengitters beträgt bei diesem Schichtsystem und mit einer Gitterperiode von 20 $\mu$m 17%, während sich in der nullten Beugungsordnung noch 11 % des einfallenden Lichts finden. Dies ist im Vergleich zu einem reinen Amplitudengitter mit einer Goldschicht, dessen Beugungseffizienz erster Ordnung bei 14 % liegt, eine deutliche Verbesserung. Die Reflexion der Antireflexschicht beträgt 9 %, die Reflexion des Spiegels beträgt 96 %.

Die erste Schicht B1 im zweiten Schichtstapel B ist eine Goldschicht, die zu deren Schutz mit einer zweiten Schicht B2 aus Chrom abgedeckt ist. Die erste Schicht B1 kann alternativ etwa auch mit Aluminium oder Silber realisiert werden. Eine dritte Schicht B3 ist hier nicht notwendig, nach der zweiten (Chrom-) Schicht B2 folgt die Umgebung mit einem Brechungsindex von 1.

Als Substrat S dient in diesem und allen anderen Ausführungsbeispielen eine transparente Glaskeramik mit einem möglichst geringen Ausdehnungskoeffizienten. Die Abtastplatte behält so auch bei Temperaturänderungen ihre Form weitestgehend bei. Solche Glaskeramiken sind z.B. unter dem Handelsnamen Zerodur bekannt. Andere optische Glaskörper wie z.B. Quarz (z.B. Herasil, Suprasil, ULE) sind ebenfalls möglich.

Für die einzelnen Schichtdicken ergeben sich bei einer Wellenlänge des zur Abtastung verwendeten Lichtes von 1000nm circa folgende Werte: A1 90nm, A2 100nm, A3 90nm, B1 80nm, B2 100nm. 10nm sind ein sinnvoller Genauigkeitsbereich für die dielektrischen Schichten. Bei den Schichten B1, B2 des metallischen Spiegels bzw. den reinen Schutzschichten auf der Rückseite der metallischen Spiegel kann die Dicke auch deutlich mehr abweichen.

Zweites Ausführungsbeispiel, basierend auf einem dielektrischen Spiegel:

| Schicht | Material | Brechungsindex |
|---------|----------|----------------|
| S | Zerodur | 1,53 |
| A1 | $Cr_2O_3$ | 2,25 + i0,01 |
| A2 | Cr | 3,10 + i1,20 |
| A3 | $Cr_2O_3$ | 2,25 + i0,01 |
| B1 | Si | 3,57 |
| B2 | $SiO_2$ | 1,44 |
| B3 | Si | 3,57 |

Die maximale Beugungseffizienz erster Ordnung des Phasengitters beträgt bei diesem Schichtsystem und mit einer Gitterperiode von 20 μm 15 %, während sich in der nullten Beugungsordnung noch 11 % des einfallenden Lichts finden. Die Reflexion der Antireflexschicht beträgt 7 %, die Reflexion des Spiegels beträgt 87 %.

Drittes Ausführungsbeispiel, basierend auf einem metallischen Spiegel:

| Schicht | Material | Typischer Brechungsindex |
|---------|----------|--------------------------|
| Sub | Zerodur | 1,53 |
| A1 | Si | 3,57 |
| A2 | Al | 1,51 + i9,26 |
| A3 | Si | 3,57 |
| B1 | Au | 0,28 + i6,18 |
| B2 | Cr | 3,10 + i1,20 |
| B3 | - | 1.00 |

Die maximale Beugungseffizienz erster Ordnung des Phasengitters beträgt bei diesem Schichtsystem und mit einer Gitterperiode von 20 μm 31 %, während sich in der nullten Beugungsordnung noch 1 % des einfallenden Lichts finden. Die Reflexion der Antireflexschicht beträgt 60 %, die Reflexion des Spiegels beträgt 96 %.

Viertes Ausführungsbeispiel, basierend auf einem dielektrischen Spiegel:

| Schicht | Material | Brechungsindex |
|---------|----------|----------------|
| Sub | Zerodur | 1,53 |
| A1 | $TiO_2$ | 2,43 |
| A2 | Ti | 3,37 + i3,24 |
| A3 | $TiO_2$ | 2,43 |
| B1 | $TiO_2$ | 2,43 |
| B2 | $SiO_2$ | 1,44 |
| B3 | Ti | 3,37 + i3,24 |

Die maximale Beugungseffizienz erster des Phasengitters beträgt bei diesem Schichtsystem und mit einer Gitterperiode von 20 μm 12 %, während sich in der nullten Beugungsordnung noch 8 % des einfallenden Lichts finden. Die Reflexion der Antireflexschicht beträgt 13%, die Reflexion des Spiegels beträgt 65 %.

Fünftes Ausführungsbeispiel, basierend auf einem dielektrischen Spiegel:

| Schicht | Material | Brechungsindex |
|---------|----------|----------------|
| Sub | Zerodur | 1,53 |
| A1 | $TiO_2$ | 2,43 |
| A2 | Ti | 3,37 + i3,24 |
| A3 | $TiO_2$ | 2,43 |
| B1 | Au | 0,28+i6,18 |
| B2 | Cr | 3,10 + i1,20 |
| B3 | - | 1,00 |

Die maximale Beugungseffizienz erster Ordnung des Phasengitters beträgt bei diesem Schichtsystem und mit einer Gitterperiode von 20 μm 18%, während sich in der nullten Beugungsordnung noch 6 % des einfallenden Lichts finden. Die Reflexion der Antireflexschicht beträgt 14 %, die Reflexion des Spiegels beträgt 96 %.

Sechstes Ausführungsbeispiel, basierend auf einem dielektrischen Spiegel:

| Schicht | Material | Brechungsindex |
|---------|----------|----------------|
| Sub | Zerodur | 1,53 |
| A1 | $Ta_2O_5$ | 2,10 |
| A2 | Ta | 0,98 + i4,89 |
| A3 | $Ta_2O_5$ | 2,10 |
| B1 | $Ta_2O_5$ | 2,10 |
| B2 | $SiO_2$ | 1,44 |
| B3 | Ta | 0,98 + i4,89 |

Die maximale Beugungseffizienz erster Ordnung des Phasengitters beträgt bei diesem Schichtsystem und mit einer Gitterperiode von 20 $\mu$m 31 %, während sich in der nullten Beugungsordnung noch 3 % des einfallenden Lichts finden. Die Reflexion der Antireflexschicht beträgt 68 %, die Reflexion des Spiegels beträgt 87 %.

Siebtes Ausführungsbeispiel, basierend auf einem metallischen Spiegel:

| Schicht | Material | Brechungsindex |
|---------|----------|----------------|
| Sub | Zerodur | 1,53 |
| A1 | $Ta_2O_5$ | 2,10 |
| A2 | Ta | 0,98 + i4,89 |
| A3 | $Ta_2O_5$ | 2,10 |
| B1 | Au | 0,28 + i6,81 |
| B2 | Cr | 3,10 + i1,20 |
| B3 | - | 1,00 |

Die maximale Beugungseffizienz erster Ordnung des Phasengitters beträgt bei diesem Schichtsystem und mit einer Gitterperiode von 20 $\mu$m 32 %, während sich in der nullten Beugungsordnung noch 2 % des einfallenden Lichts finden. Die Reflexion der Antireflexschicht beträgt 62 %, die Reflexion des Spiegels beträgt 96 %.

Anhand der zahlreichen Ausführungsbeispiele kann man erkennen, dass das Prinzip, drei Funktionsflächen 1, 2, 3 mit nur zwei Schichtstapeln A, B zu realisieren, zu Kompromissen zwingt. Dennoch kann aus vielen verschiedenen Möglichkeiten eine passende Kombination gefunden werden, die die jeweils am dringendsten benötigten Eigenschaften (Beugungseffizienz des Gitters, Reflexion von Antireflexschicht und Spiegel) besonders gut umsetzt, und bei den übrigen Eigenschaften gut genug ist. Das Ziel, die Herstellung eines multifunktionalen, optischen Schichtsystems mit guten Beugungseffizienzen des Phasengitters zu vereinfachen, wird mit der vorliegenden Erfindung erreicht.

**Patentansprüche**

1. Optisches Schichtsystem für eine Positionsmesseinrichtung, mit einem transparenten, flächigen Substrat (S), auf dessen Oberfläche wenigstens eine erste, zweite und dritte Funktionsfläche (1, 2, 3) mit jeweils unterschiedlicher optischer Funktion bereit gestellt ist, wobei die optischen Funktionen eine Antireflexschicht, ein Spiegel und ein optisches Gitter sind, **dadurch gekennzeichnet, dass** diese Funktionsflächen (1, 2, 3) aus nur zwei unterschiedlichen Schichtstapeln (A, B), nämlich aus einem ersten Schichtstapel (A) und einem zweiten Schichtstapel (B) aufgebaut sind, die auf derselben Seite des Substrats (S) angeordnet sind, wobei die erste Funktionsfläche (1) aus dem ersten Schichtstapel (A) besteht und als Antireflexschicht wirkt, und wobei die dritte Funktionsfläche (3) aus dem zweiten Schichtstapel (B) besteht und als Spiegel wirkt, und wobei die zweite Funktionsfläche (2) als optisches Gitter mit Beugungseffekten wirkt, indem die beiden Schichtstapel (A, B) in Abständen von weniger als 1 mm, bevorzugt weniger als 50 $\mu$m, besonders bevorzugt weniger als 20 $\mu$m abwechselnd angeordnet sind.

2. Optisches Schichtsystem nach Anspruch 1, **dadurch gekennzeichnet, dass** die zweite Funktionsfläche (2) ein Phasengitter ist.

**3.** Optisches Schichtsystem nach einem der vorhergehenden Ansprüche, **dadurch gekennzeichnet dass** die dritte Funktionsfläche (3) als metallischer Spiegel ausgebildet ist, und dass der zweite Schichtstapel (B) genau zwei Schichten (B1, B2) umfasst,

**4.** Optisches Schichtsystem nach Anspruch 3, **dadurch gekennzeichnet, dass** der zweite Schichtstapel (B) aus einer auf dem Substrat (S) angeordneten Schicht (B1) aus Gold oder alternativ aus Aluminium oder Silber, sowie einer auf der Schicht (B1) angeordneten Schutzschicht (B2) aus Chrom aufgebaut ist.

**5.** Optisches Schichtsystem nach Anspruch 4, **dadurch gekennzeichnet, dass** die Schicht (B1) eine Dicke von ca. 80nm aufweist.

**6.** Optisches Schichtsystem nach einem der vorhergehenden Ansprüche, **dadurch gekennzeichnet, dass** der erste Schichtstapel (A) aus folgenden Schichten aufgebaut ist: eine erste Schicht (A1) aus Chromoxid auf dem Substrat (S), einer zweiten Schicht (A2) aus Chrom, und einer dritten Schicht (A3) aus Chromoxid.

**7.** Optisches Schichtsystem nach Anspruch 6, **dadurch gekennzeichnet, dass** die erste Schicht (A1) und die dritte Schicht (A3) ca. 90nm dick sind, und dass die zweite Schicht (A2) ca. 100nm dick ist.

**8.** Optisches Schichtsystem nach einem der Ansprüche 1 - 2, **dadurch gekennzeichnet dass** die dritte Funktionsfläche (3) als dielektrischer Spiegel ausgebildet ist.

**9.** Positionsmesseinrichtung mit einer Maßverkörperung und einem Abtastkopf, wobei der Abtastkopf eine Abtastplatte mit einem optischen Schichtsystem nach einem der vorhergehenden Ansprüche umfasst.

**10.** Positionsmesseinrichtung nach Anspruch 9, **dadurch gekennzeichnet, dass** die zweite Funktionsfläche (2) zur Abtastung einer Referenzmarke auf der Maßverkörperung dient.

**Claims**

**1.** Optical layer system for a position measuring device, comprising a transparent, planar substrate (S), on the surface of which at least a first, second and third functional surface (1, 2, 3) each having a different optical function are provided, wherein the optical functions are an antireflection layer, a mirror and an optical grating, **characterized in that** said functional surfaces (1, 2, 3) are constructed from only two different layer stacks (A, B), namely from a first layer stack (A) and a second layer stack (B), which are arranged on the same side of the substrate (S), wherein the first functional surface (1) consists of the first layer stack (A) and acts as an antireflection layer, and wherein the third functional surface (3) consists of the second layer stack (B) and acts as a mirror, and wherein the second functional surface (2) acts as an optical grating having diffraction effects by virtue of the two layer stacks (A, B) being arranged alternately at distances of less than 1 mm, preferably less than 50 $\mu$m, particularly preferably less than 20 $\mu$m.

**2.** Optical layer system according to Claim 1, **characterized in that** the second functional surface (2) is a phase grating.

**3.** Optical layer system according to either of the preceding claims, **characterized in that** the third functional surface (3) is embodied as a metallic mirror, and **in that** the second layer stack (B) comprises exactly two layers (B1, B2).

**4.** Optical layer system according to Claim 3, **characterized in that** the second layer stack (B) is constructed from a layer (B1) of gold or alternatively of aluminium or silver, said layer being arranged on the substrate (S), and also a protective layer (B2) of chromium, said protective layer being arranged on the layer (B1).

**5.** Optical layer system according to Claim 4, **characterized in that** the layer (B1) has a thickness of approximately 80 nm.

**6.** Optical layer system according to any of the preceding claims, **characterized in that** the first layer stack (A) is constructed from the following layers: a first layer (A1) of chromium oxide on the substrate (S), a second layer (A2) of chromium, and a third layer (A3) of chromium oxide.

**7.** Optical layer system according to Claim 6, **characterized in that** the first layer (A1) and the third layer (A3) are approximately 90 nm thick, and **in that** the second layer (A2) is approximately 100 nm thick.

8. Optical layer system according to either of Claims 1 - 2, **characterized in that** the third functional surface (3) is embodied as a dielectric mirror.

9. Position measuring device comprising a material measure and a scanning head, wherein the scanning head comprises a scanning plate comprising an optical layer system according to any of the preceding claims.

10. Position measuring device according to Claim 9, **characterized in that** the second functional surface (2) serves for scanning a reference mark on the material measure.


**Revendications**

1. Système de couches optiques destiné à un dispositif de mesure de position, comportant un substrat (S) transparent et plat, sur la surface duquel est prévue au moins une première, une deuxième et une troisième surface fonctionnelle (1, 2, 3), qui présentent chacune une fonction optique différente, dans lequel les fonctions optiques sont une couche antireflet, un miroir et un réseau optique, **caractérisé en ce que** lesdites surfaces fonctionnelles (1, 2, 3) ne sont composées que de deux empilements de couches différents (A, B), à savoir un premier empilement de couches (A) et un second empilement de couches (B), qui sont disposés du même côté du substrat (S), dans lequel la première surface fonctionnelle (1) est constituée du premier empilement de couches (A) et fait office de couche antireflet, et dans lequel la troisième surface fonctionnelle (3) est constituée du deuxième empilement de couches (B) et fait office de miroir, et dans lequel la deuxième surface fonctionnelle (2) fait office de réseau optique avec des effets de diffraction en raison du fait que les deux empilements de couches (A, B) sont disposés alternativement à des intervalles inférieurs à 1 mm, de préférence inférieurs à 50 $\mu$m et de manière particulièrement préférée, inférieurs à 20 $\mu$m.

2. Système de couches optiques selon la revendication 1, **caractérisé en ce que** la deuxième surface fonctionnelle (2) est un réseau de phase,

3. Système de couches optiques selon l'une des revendications précédentes, **caractérisé en ce que** la troisième surface fonctionnelle (3) est réalisée sous la forme d'un miroir métallique et **en ce que** le deuxième empilement de couches (B) comprend exactement deux couches (B1, B2).

4. Système de couches optiques selon la revendication 3, **caractérisé en ce que** le deuxième empilement de couches (B) est composé d'une couche (B1) d'or, ou alternativement d'aluminium ou d'argent, qui est disposée sur le substrat (S), et d'une couche de protection (B2) en chrome qui est disposée sur la couche (B1).

5. Système de couches optiques selon la revendication 4, **caractérisé en ce que** la couche (B1) présente une épaisseur d'environ 80 nm.

6. Système de couches optiques selon l'une des revendications précédentes, **caractérisé en ce que** le premier empilement de couches (A) est composé des couches suivantes : une première couche (A1) d'oxyde de chrome sur le substrat (S), une deuxième couche (A2) de chrome, et une troisième couche (A3) d'oxyde de chrome.

7. Système de couches optiques selon la revendication 6, **caractérisé en ce que** la première couche (A1) et la troisième couche (A3) présentent une épaisseur d'environ 90 nm et **en ce que** la deuxième couche (A2) présente une épaisseur d'environ 100 nm.

8. Système de couche optique selon l'une des revendications 1 à 2, **caractérisé en ce que** la troisième surface fonctionnelle (3) est réalisée sous la forme d'un miroir diélectrique.

9. Dispositif de mesure de position comprenant un étalon de mesure et une tête de balayage, dans lequel la tête de balayage comprend une plaque de balayage comportant un système de couches optiques selon l'une des revendications précédentes.

10. Dispositif de mesure de position selon la revendication 9, **caractérisé en ce que** la deuxième surface fonctionnelle (2) sert à balayer une marque de référence sur l'étalon de mesure.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2450673 B1
- EP 0742455 A1
- DE 10236788 A1